# EUROPEAN PATENT APPLICATION

(11) **EP 4 822 976 A1**
(43) Date of publication of application: **14.10.2026**
(21) Application number: 26166071.6
(22) Date of filing: 19.03.2026
(51) Int. Cl.: H02M 3/335, H02M 1/00, H02M 3/00, H02M 3/137

(54) **RESONANT POWER CONVERTER AND METHOD OF FORMING**

(30) Priority: 08.04.2025 US 202519173418
(71) Applicant: GE Aviation Systems LLC, Grand Rapids, MI 49512 (US)
(72) Inventor: CHINTA, Ratnakishore, 560066 Bengaluru (IN); KARIPIDES, David Dimitri, Vandalia, 45377-3062 (US); RAMABHADRAN, Ramanujam, Grand Rapids, 49512 (US); KHAN, Mohd Shahnawaz, 560066 Bengaluru (IN)
(74) Representative: Openshaw & Co.

(57) **Abstract**

A resonant power converter (200), (300) and method (400) of forming is disclosed. The resonant power converter (200), (300) includes a switch network (202) and a primary winding (241) of a transformer (208) is electrically coupled to the switch network (202). A first resonant tank (204a) is electrically coupled to a first secondary winding (242a) of the transformer (208), and a second resonant tank (204b) is electrically coupled to a second secondary winding (242b) of the transformer (208). A first output conditioning portion (214a) is electrically coupled to the first resonant tank (204a) and a second output conditioning portion (214b) is electrically coupled to the second resonant tank (204b).

## Description

### TECHNICAL FIELD

The present disclosure relates generally to power converters and more particularly to a resonant power converter having multiple power outputs.

### BACKGROUND

Electric power converters are electrical devices or circuits that operate to convert a direct current (DC) to an alternating current (AC), (e.g., DC-AC), or from DC to DC, (e.g., DC-DC) or from AC to DC (e.g., AC-DC) as well as the voltage or frequency, or some combination of these. Conventional power converters are often made with one more conversion stages. For example, a DC-AC power converter (e.g., an inverter), can include two stages, a first DC to DC conversion stage to make a DC voltage, followed by a DC to AC conversion stage which supplies an AC voltage to an electrical load. The conversion stages can also be arranged as a step-down or "buck" converter (e.g., a DC-DC power converter which steps down voltage received at its input (supply) to its output (load)). Alternatively, the conversion stages can also be arranged as a "boost" or step-up converter (e.g., a DC-DC power converter that steps up voltage from its input to its output). Still other converters can be arranged to selectively provide buck or boost modes.

Electric power converters typically include air and other dielectric materials as an electrical insulating medium. When operated at relatively high altitudes, (e.g., over 2,000 meters above sea level) such as in an aircraft, a density and dielectric strength of the dielectric materials can be diminished, resulting in diminished performance.

### BRIEF DESCRIPTION OF THE DRAWINGS

A full and enabling disclosure of the present description, including the best mode thereof, directed to one of ordinary skill in the art, is set forth in the specification, which refers to the appended FIGS., in which:
FIG. 1 depicts a schematic diagram of a conventional resonant converter.
FIG. 2 depicts a schematic diagram of an exemplary resonant power converter in accordance with various aspects described herein.
FIG. 3 depicts a schematic diagram of another exemplary resonant power converter in accordance with various aspects described herein.
FIG. 4 depicts a flow diagram of a method of forming a resonant power converter in accordance with various aspects described herein.

### DETAILED DESCRIPTION

The exemplary drawings are for purposes of illustration only and the dimensions, positions, order and relative sizes reflected in the drawings attached hereto can vary. Furthermore, the number of, and placement of, the various components depicted in the Figures are also non-limiting examples of aspects associated with the disclosure. For example, while various components have been illustrated with relative position of etc., aspects of the disclosure are not so limited, and the components are not so limited based on their schematic depictions.

Aspects of the disclosure can be implemented in any environment, apparatus, or method for an electrical filter regardless of the function performed by the apparatus or method.

As used herein, the term "set" or a "set" of elements can be any number of elements, including only one.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and systems. In at least some instances, the approximating language may correspond to the precision of an instrument for measuring the value, or the precision of the methods or machines for constructing or manufacturing the components and systems. For example, the approximating language may refer to being within a 1, 2, 4, 5, 10, 15, or 20 percent margin in either individual values, range(s) of values and endpoints defining range(s) of values.

As used herein, the term "upstream" refers to a direction that is opposite the current flow direction, and the term "downstream" refers to a direction that is in the same direction as the current flow. Accordingly, an "upstream" end of an element opposes a "downstream" end of the element.

Additionally, while terms such as "voltage", "current", and "power" can be used herein, it will be evident to one skilled in the art that these terms can be interrelated when describing aspects of the electrical circuit, or circuit operations.

Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. In non-limiting examples, connections or disconnections can be selectively configured to provide, enable, disable, or the like, an electrical connection between respective elements. Additionally, as used herein, "electrical connection" or "electrically coupled" can include a wired or wireless connection. The exemplary drawings are for purposes of illustration only and the dimensions, positions, order and relative sizes reflected in the drawings attached hereto can vary.

As used herein, the term "conductivity" refers to a property of a material that allows a flow of charge or electric current therethrough. Also as used herein, the term "electrical conductor" or "conductive element" refers to a material or structure that exhibits a relatively high electrical conductivity (for example, greater than about 10⁻⁷ siemens per meter (S/m)). Unless stated otherwise, as used herein, the terms "conductive", "conductor", "conductivity" and the like refer to electrical properties of a material or structure. For example, the term "conductor" refers to an electrical conductor.

As used herein, the term "insulative" refers to a property of a material that resists a flow of charge or electric current therethrough Also as used herein, the term "insulator" or "insulation" refers to a material that exhibits a low electrical conductivity (for example, less than about 10⁻⁸ siemens per meter (S/m)). Unless stated otherwise, as used herein, the term "insulative" refers to electrical insulation, and the term "insulator" refers to an electrical insulator.

As used herein, the term "dielectric" refers to an electrically insulative material that can be polarized by an electric field.

As used herein, the term "dielectric breakdown strength" refers to a maximum voltage that a material can withstand before it becomes electrically conductive. Dielectric breakdown strength can be measured in volts per unit thickness (e.g., V/mm or Volts per mil). Dielectric breakdown strength can be calculated by dividing a breakdown voltage by a thickness of the material.

As used herein, the term "partial discharge" refers to a localized electrical discharge that only partially bridges the insulation between conductors, and which may or may not occur adjacent to an electrical conductor. Partial discharges are in general a consequence of local electrical stress concentrations in or on an insulator. For example, in some instances, a partial discharge can occur on the surface of an insulator (e.g., a surface partial discharge). In other instances, a partial discharge can occur within or internal to the insulation (e.g., an internal partial discharge). Partial discharges generally do not cause electrical failure (e.g., an arcing condition) immediately. However, such discharges can be repeated and can ultimately break down various insulating layers over time (e.g., of an electric winding assembly). This, in turn, can place the electric winding assembly at higher risk for arcing conditions to occur over time through the degradation of the insulating layers. Environmental conditions and performance parameters such as, for example, altitude and operating voltages, respectively, can increase the likelihood of an arc fault event to occur. In general, partial discharges can be categorized into internal partial discharge, surface partial discharge, and corona discharge.

Conventional transformers typically include two separate coils or sets of windings (e.g., inductors). The two separate coils often have different numbers of individual "turns" of respective insulated conductors wound around the same ferromagnetic core to have a magnetic coupling between them. The two coils are commonly referred to as a primary winding and a secondary winding, Typically, the primary winding is energized by a source, and the secondary winding is connected to an electrical load. Typically, the primary winding and the secondary winding are wound on a common ferromagnetic core. For example, in many cases, the primary winding and the secondary winding wound on the same center leg of an E-shaped ferromagnetic core, with one the coils of one winding overlaying the coils of the other winding, such that there is no separation between them other than a respective insulative coating on each winding. Transformers are often used in power converters such as DC-DC converters, or DC-AC converters (e.g., a three-phase inverter).

Aspect of the disclosure will be discussed herein, for brevity of description and understanding in the context of a DC-DC power converter. Other aspects are not so limited, and can include AC-DC power converters as well as DC-AC power converters, or portions or stages thereof.

Aspects will be also be described with respect to an exemplary instance, namely an inductor-inductor-capacitor ("LLC") resonant converter. A resonant power converter is a type of electric power converter that uses a switching network electrically coupled to tuned circuit, sometimes called a "resonant tank", of capacitors and inductors, to achieve zero-voltage or zero-current switching. This arrangement allows for higher switching frequencies and reduces energy loss compared to traditional converters. It is contemplated aspects are not limited to LLC resonant converters, and aspects can include any of a variety of resonant converters, including series resonant converters (e.g., having an electrical load in series with a resonant inductor and a resonant capacitor) and parallel resonant converters (e.g., having a resonant capacitor in parallel with an electrical load).

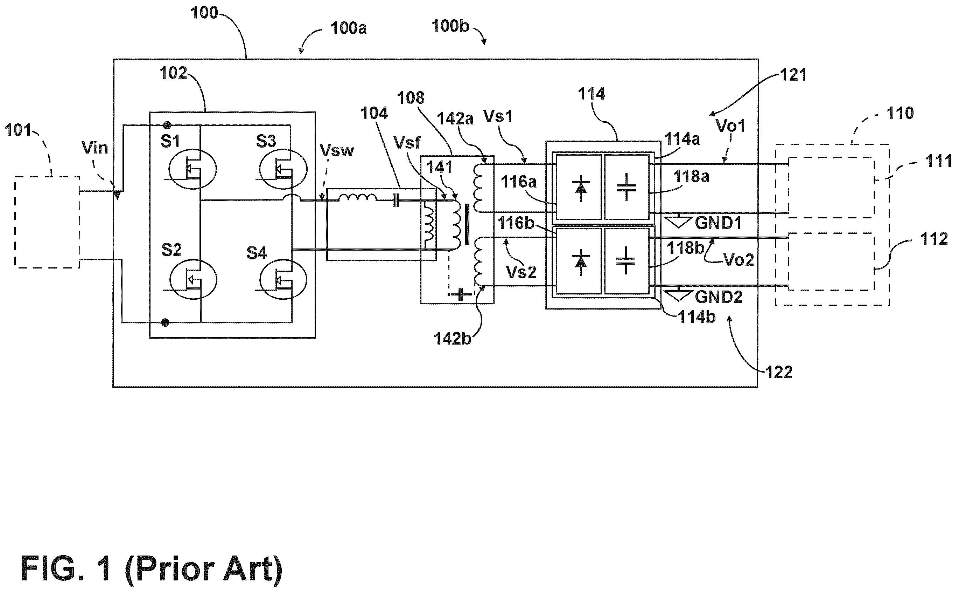

FIG. 1 illustrates a block diagram of a typical resonant power converter 100 arranged as an LLC resonant converter. The resonant power converter 100 is electrically coupled between an input DC power source 101 and an electrical load 110. In many cases, the resonant power converter 100 can be electrically coupled to a set of electrical loads 110. For example, the resonant power converter 100 can have a first output portion 121 electrically coupled to a first electrical load 111 and a second output portion 122 electrically coupled to a second electrical load 112. The resonant power converter 100 typically includes a switch network 102, a resonant tank 104, a transformer 108, and an output conditioning portion 114.

As shown in FIG. 1, the switch network 102, the resonant tank 104, the transformer 108, and the output conditioning portion are coupled to each other and connected in series, from an upstream or primary side 100a (e.g., on a primary side of the transformer 108) to a downstream or secondary side 100b (e.g., on a secondary side of the transformer), between the input DC power source 101 and the set of electrical loads 110.

The switch network 102 typically includes a set of electronic switches (depicted as a set of four MOSFET electronic switches S1-S4) arranged as a full-bridge power converter. In other instances, although not shown, the switch network 102 may be arranged as a half-bridge converter, a push-pull converter, and the like.

The resonant tank 104 is conventionally arranged on the primary side 100a of the resonant power converter 100. The resonant tank can be implemented in a variety of ways. Generally, the resonant tank 104 includes three resonant elements, namely a series resonant inductor Lr, a parallel resonant inductor, the transformer primary winding 141 and a series resonant capacitor Cr. Such a configuration is commonly referred to as an LLC resonant converter. According to well-known operating principles of LLC resonant converters, at a switching frequency approximately equal to the resonant frequency of the resonant tank 104 (e.g., a frequency at which an inductive reactance (XL) of the resonant tank 104 substantially cancels out a capacitive reactance (XC) of the resonant tank 104, resulting in the resonant circuit having a reduced impedance), the resonant tank 104 helps to achieve zero voltage switching for the electronic switches S1-S4. Many other resonant tank arrangements are possible, and the specific resonant elements and arrangements are not germane to the disclosure.

The transformer 108 can provide electrical isolation between the primary side 100a and the secondary side 100b of the resonant power converter 100. The transformer 108 is typically formed of at least two transformer windings, namely a transformer primary winding 141 and at least one transformer secondary winding 142a, 142b.

The transformer primary winding 141 is electrically coupled at a downstream or output side of the resonant tank 104. The first electrical load 111 is electrically coupled to the first transformer secondary winding 142a, and the second electrical load 112 is electrically coupled to the second transformer secondary winding 142b. In such instances in which the resonant power converter 100 is electrically coupled to more than one electrical load 111, 112, the output conditioning portion 114 can include a respective output conditioning portion 114a, 114b coupled to respective transformer secondary winding and a respective electrical load 111, 112. For example, a first output conditioning portion 114a is electrically coupled in series between the first transformer secondary winding 142a and the first electrical load 111, and a second output conditioning portion 114b is electrically coupled to the second transformer secondary windings 142b.

The first and second output conditioning portions 114a, 114b can include, for example, a first rectifier 116a, and second rectifier 116b, respectively, and a first output filter 118a, and a second output filter 118b, respectively (e.g., a respective capacitor C1, C2). In some instances, the output conditioning portion can include a respective voltage regulator (not shown).

In some conventional arrangements, the first rectifier 116a and the second rectifier 116b can each be a respective half-wave or a full-wave rectifier electrically coupled to the respective secondary winding 142a, 142b of the transformer 108. In other conventional LLC resonant converters, the first and second rectifier 116a, 116b can be formed by diodes, or by other types of controllable devices such as metal oxide semiconductor field effect transistor (MOSFET) devices, bipolar junction transistor (BJT) devices, super junction transistor (SJT) devices, insulated gate bipolar transistor (IGBT) devices, gallium nitride (GaN) based power devices and/or the like. The detailed operation and structure of rectifiers are well known in the art, and hence are not discussed in detail herein.

In operation, the input DC power source 101 provides an input DC voltage Vin to the switch network 102. The switch network 102 is selectively operated, for example, by a controller (not shown) to convert the input DC voltage Vin into a high-frequency square wave voltage Vsw via a soft-switching, or zero-voltage switching (ZVS) operation, at turn-on. Typically, one pair of the electronic switches S1-S4 are operated at a time for one half cycle of a control waveform and the other pair of the electronic switches S1-S4 are operated during the other half of the control waveform. For example, a pulse width modulation (PWM) signal can be provided to either switch of the one pair of the electronic switches S1-S4 on each leg simultaneously as a pair, or switch them independently in series. Regardless of the topology of the switch network, and the control schema used, the high-frequency square wave voltage Vsw is provided to the resonant tank 104, which operates to eliminate or reduces any harmonic frequencies therein, and outputs an alternating polarity voltage at a fundamental frequency (e.g., the lowest frequency of the square wave voltage Vsw). The alternating polarity voltage Vsf is provided to the transformer primary winding 141. The transformer 108 can operatively provide voltage scaling (e.g., a step-up or step-down of the voltage) and further provide primary-secondary isolation. The transformer 108 produces a first alternating polarity voltage Vs1 across the first transformer secondary winding 142a and a second alternating polarity voltage Vs2 across the second transformer secondary winding 142b. The first and second alternating polarity voltage Vs1, Vs2 are provided to the output conditioning portion 114. The first rectifier 116a, and second rectifier 116b, respectively, and a first output filter 118a, and a second output filter118b, respectively (e.g., the respective capacitor C1, C2) converts the respective first and second alternating polarity voltage Vs1, Vs2 into a stable first DC output voltage Vo1, and second DC output voltage Vo2, respectively. For example, the first rectifier 116a, and second rectifier 116b convert the respective first and second alternating polarity voltages Vs1, Vs2 received from the first and second transformer secondary windings 142a, 142b to a respective single polarity voltage or first DC output voltage Vo1, and second DC output voltage Vo2, waveform. The first output filter 118a, and the second output filter118b attenuate any switching ripple present on the first DC output voltage Vo1, and second DC output voltage Vo2 waveforms. The first DC output voltage Vo1, and the second DC output voltage Vo2, are then provided to the first electrical load 111 and second electrical load 112, respectively.

The mutual inductance, or magnetic coupling by which power is transferred from the primary winding 141 to the at least one transformer secondary winding 142a, 142b, can be quantized as a "coefficient of coupling" of the transformer 108. Generally, the coefficient of coupling can be defined as a ratio of the number of magnetic flux lines common between two windings to the number of magnetic flux lines in a winding. The better the transformer primary and secondary windings 141, 142a, 142b are magnetically coupled to each other, the more efficient the electromagnetic induction between them. Imperfect magnetic coupling between the transformer primary winding 141, and the first and second transformer secondary windings 142a, 142b (e.g., less than all magnetic flux generated by the transformer primary winding 141 penetrates the transformer secondary windings 142a, 142b), results in reduction of the voltage induced in the first and second transformer secondary windings 142a, 142b. The imperfect magnetic coupling behaves as a self-inductance in series with the transformer primary winding 141 and is referred to a "leakage inductance". Any magnetic flux that does not link the transformer primary winding 141 to the secondary windings 142a, 142b acts as inductive impedance in series with the transformer primary winding 141, therefore this "leakage inductance" can be considered as an additional inductance in series with the transformer primary winding 141

Conventional power converters, such as resonant power converter 100, can experience problems with partial discharge events (e.g., electrical insulation on the primary winding 141 and secondary windings 142a, 142b) particularly when operated in relatively high altitudes (e.g. over 2,000 meters above sea level), such as in an aircraft. Additionally, conventional power converters can also experience problems with electromagnetic interference (EMI) that increases with altitude (e.g., due to the close proximity of the primary and secondary windings 141, 142a, 142b to each other on the ferromagnetic core).

One solution to address the known problems with partial discharge and EMI in resonant power converters operated at relatively high altitudes (e.g. in an aircraft) is to increase a physical separation between the primary and secondary windings 141, 142a, 142b. For example, instead of being wound on the same leg of an E-shaped ferromagnetic core (e.g., without separation between them), the transformer primary and secondary windings 141, 142a, 142b can instead be wound on separate legs of a common ferromagnetic core, sometimes called a "split core" or "split bobbin". Such physical separation or split core arrangements can result in a decrease of the coupling capacitance (e.g., a capacitance between adjacent wires or conductors) between the primary and secondary windings 141, 142a, 142b (e.g., from about 10 picofarads (pF) to about 5pF), with a consequent increase in dielectric strength between the primary and secondary windings 141, 142a, 142b. The decreased coupling capacitance and increased dielectric strength can beneficially result in an increased resistance to partial discharge events, and with a reduction in EMI, between the primary and secondary windings 141, 142a, 142b even at relatively high altitudes.

However, reducing the coupling capacitance between the primary and secondary windings 141, 142a, 142b by introducing or a gap therebetween (e.g., a split core transformer) can result in an undesireable leakage inductance across the transformer 108. This leakage inductance can be inversely proportional to the coupling capacitance, and can cause undesirable voltage fluctuations under varying electrical loads.

Aspects as disclosed herein can overcome the noted shortcomings of conventional resonant power converters to enable operation even at relatively high altitudes (e.g., in an aircraft application). Aspects as disclosed herein can arrange a resonant power converter having a respective resonant tank electrically coupled downstream from each respective transformer secondary winding Aspects as disclosed herein can beneficially enable a decreased coupling capacitance between the primary and secondary windings 141, 142a, 142b (e.g., via a split core transformer), while advantageously accounting for and advantageously using the resultant leakage inductance at each secondary winding 142a, 142b by coupling the leakage inductance with a respective resonant tank.

Additionally, it can be desirable for resonant power converters to provide the respective output signal V1, V2 having a predetermined respective output gain (e.g., a different respective output gain for each output portion 121, 122). The output gain (e.g., the ratio of the respective output signal V1, V2 to the input signal Vin) of conventional resonant converters can be affected by several factors including an output gain of the switch network 102, an output gain of the resonant tank 104, and a turns ratio of the transformer 108., Thus, in conventional resonant converters, the contribution to the output gain from the switch network 102 and the resonant tank 104 will be the same for both the first output portion 121 and the second output portion 122, while, the contribution to the output gain of the transformer 108 can be varied with respect to the first output portion 121 and the second output portion 122 by varying the respective number of turns of the first transformer secondary winding 142a and the second transformer secondary winding 142b. Accordingly, conventional power converters are limited in their ability to enable a different respective output gain at each output portion to only varying the number of respective secondary winding turns. In contrast to conventional resonant converters, aspects as described herein beneficially enable further selective arrangement of the respective output gain for each output portion by further employing a different respective resonant tank for each output portion, wherein an output gain of each resonant tank is different with respect to each other.

Additionally, as described herein each output portion can include a respective voltage regulation portion to enable split positive and negative voltage outputs from each respective secondary winding.

Furthermore, aspects as disclosed herein can beneficially employ the leakage inductance of the transformer as part of the resonant tank, thereby enabling the use of smaller, less expensive components.

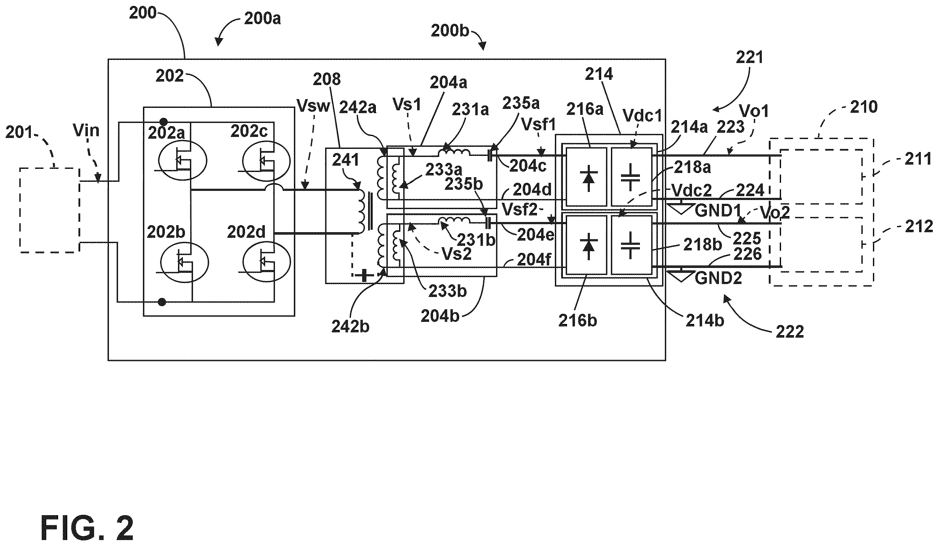

FIG. 2 illustrates schematic diagram in accordance with a non-limiting aspect of a resonant power converter 200. The resonant power converter 200 is electrically couplable between the input DC power source 201 and the electrical load 210. As illustrated, the resonant power converter 200 can be electrically coupled to a set of electrical loads 210 to provide electrical power thereto. For example, the resonant power converter 200 can have a first output portion 221 electrically coupled to the first electrical load 211 and a second output portion 222 electrically coupled to a second electrical load 212. The resonant power converter 200 can include a switch network 202, a transformer 208, a first resonant tank 204a, a second resonant tank 204b, and an output conditioning portion 214. The output conditioning portion can include a first output conditioning portion 214a and a second output conditioning portion 214b.

In non-limiting aspects, the set of electrical loads 210 can be a set of electrical loads on an aircraft (not shown). However, it is contemplated that the set of electrical loads 210 can be in an environment, at any altitude, without departing from the scope of the disclosure herein. The set of electrical loads 210 can include a fixed electrical load or a variable electrical load, or combinations thereof. In non-limiting aspects, the set of electrical loads 210 can include DC electrical loads. For example, the set of electrical loads 210 can include a gate driver circuit for a set of semiconductor switching devices, such as MOSFETs (not shown).

As shown in FIG. 2, the switch network 202 is electrically coupled in series between the input DC power source 201 and an upstream or primary side of the transformer 208, defining a primary side 200a of the resonant power converter 200. The first resonant tank 204a, and the second resonant tank 204b, are electrically coupled to a respective first transformer secondary winding 242a and a second transformer secondary winding 242b at a downstream or secondary side of the transformer 208 to define a secondary side 200b of the resonant power converter 200. The first resonant tank 204a, and the second resonant tank 204b are electrically coupled in series between the respective first transformer secondary winding 242a and the second transformer secondary winding 242b, respectively, and the output conditioning portion 214. The first resonant tank 204a can be electrically coupled to the first output conditioning portion 214a, via a first resonant tank first output line 204c and a first resonant tank second output line 204d. The first alternating polarity voltage Vsfl can be defined across the first resonant tank first output line 204c and the first resonant tank second output line 204d. The second resonant tank 204b can be electrically coupled to the second output conditioning portion 214b via a second resonant tank third output line 204e and a second resonant tank fourth output line 204f. The second alternating polarity voltage Vsf2 can be defined across the second resonant tank third output line 204e and the second resonant tank fourth output line 204f. The first output conditioning portion 214a and the second output conditioning portion 214b can be electrically coupled to the first electrical load 211 and second electrical load 212, respectively. For example, in non-limiting aspects, the first output conditioning portion 214a can be electrically coupled to the first electrical load 211 by a first output line 223 (e.g., a first positive voltage output line) and a second output line 224 (e.g., a first negative voltage output line). The first DC output voltage Vo1 can be defined between the first output line 223 and the second output line 224. In some cases, the second output line 224 can be electrically coupled to a first electrical ground (GND1), and the first DC output voltage Vo1 can be defined between the first output line 223 and the first electrical ground GND1. In non-limiting aspects, the second output conditioning portion 214b can be electrically coupled to the second electrical load 212 by a third output line 225 (e.g., a second positive voltage output line) and a fourth output line 226 (e.g., a second negative voltage output line). The second DC output voltage Vo2 can be defined between the third output line 225 and the fourth output line 226. In some cases, the fourth output line 226 can be electrically coupled to a second electrical ground (GND2), and the second DC output voltage Vo2 can be defined between the third output line 225 and the second electrical ground GND2. In some non-limiting aspects, the first electrical ground GND1 and the second electrical ground GND2 can be the same electrical ground.

In the illustrated example of FIG. 2, the switch network 202 is depicted as a full-bridge power converter switch network including a set of electronic switches 202a-202d. Other aspects are not so limited, and the switch network 202 can include any number of electronic switching devices, arranged, without limitation, as a half-bridge converter, a push-pull converter, square wave generator, and the like.

The first resonant tank 204a and the second resonant tank 204b are arranged on the secondary side 200b of the resonant power converter 200. The first resonant tank 204a and the second resonant tank 204b can be implemented in a variety of ways. In non-limiting aspects, first resonant tank 204a and the second resonant tank 204b can each include three respective resonant elements, namely a series resonant inductor 231a, 231b, a parallel resonant inductor 233a, 233b and a series resonant capacitor 235a, 235b. In non-limiting aspects, a respective inductance of the series resonant inductor 231a, 231b, or the parallel resonant inductor 233a, 233b, or both, can include the magnetizing inductance, or the leakage inductance of the transformer 208. According to the well-known operating principles of resonant converters, at a switching frequency approximately equal to the respective resonant frequency of the first resonant tank 204a, and the second resonant tank 204b, the first and second resonant tanks 204a, 204b cooperate to achieve zero voltage switching for the electronic switches 202a-202d of the switch network 202. However, many other resonant tank arrangements are possible, and the specific resonant elements and arrangements are not germane to the disclosure. In non-limiting aspects, the first and second resonant tanks 204a, 204b can be configured to have a respective predetermined output gain (e.g., a ratio of an output voltage to an input voltage. In some non-limiting aspects, the first and second resonant tanks 204a, 204b can be configured to have a respective output gain that is substantially equal. In other non-limiting aspects, the first and second resonant tanks 204a, 204b can be configured to have a respective output gain that is different in relation to one another. (e.g., an output gain of the first resonant tank 204a can be different from an output gain of the second resonant tank 204b).

The transformer 208 can provide electrical isolation between the primary side 200a and the secondary side 200b of the resonant power converter 200. The transformer 208 can include at least two transformer windings, namely the transformer primary winding 241 and the at least one transformer secondary winding 242a, 242b. The transformer primary winding 241 can be spaced from the at least one transformer secondary winding 242a, 242b. For example, in non-limiting aspects, the transformer 208 can be a split core transformer. In non-limiting aspects, the first transformer secondary winding 242a and the second transformer secondary winding 242b can have a different number of turns (e.g., a different respective number of turns in relation to one another).

The first and second output conditioning portions 214a, 214b can include, for example, a first rectifier 216a, and second rectifier 216b, respectively, and a first output filter 218a, and a second output filter 218b, respectively (e.g., a respective capacitor C1, C2). In some instances, the output conditioning portion 214 can include a respective voltage regulator (not shown).

In some aspects, the first and second rectifier 216a, 216b can define a respective half-wave rectifier, or a full-wave rectifier, electrically coupled to the respective first resonant tank 204a and the second resonant tank 204b. In non-limiting aspects, the first and second rectifier 216a, 216b can each include diode network such as a respective pair of diodes (not shown). Alternatively, the first and second rectifier 216a, 216b can each include a respective pair of switching elements such as n-type metal oxide semiconductor (NMOS) transistors (not shown). In some aspects, the first and second rectifier 216a, 216b can be formed by other types of controllable devices such as metal oxide semiconductor field effect transistor (MOSFET) devices, bipolar junction transistor (BJT) devices, super junction transistor (SJT) devices, insulated gate bipolar transistor (IGBT) devices, gallium nitride (GaN) based power devices and/or the like. The detailed operation and structure of rectifiers are well known in the art, and hence are not discussed in detail herein.

In operation, the input DC power source 201 provides the input DC voltage Vin to the switch network 202. The switch network 202 can be selectively operated, for example, by a controller (not shown) to convert the input DC voltage Vin into a high-frequency square wave voltage Vsw via a soft-switching, or zero-voltage switching (ZVS) operation, at turn-on resulting in low electro-magnetic emissions levels (EMI). The high-frequency square wave voltage Vsw is provided to the transformer primary winding 241 of the transformer 208. The transformer 208 can operatively provide voltage scaling (e.g., a step-up or step-down of the voltage) and can further provide primary-secondary isolation. The transformer 208 produces a respective first secondary voltage Vs1, and second secondary voltage Vs2 across the first transformer secondary winding 242a and the second transformer secondary winding 242b, respectively.

In non-limiting aspects, the respective first and second secondary voltage Vs1, Vs2 is provided to the first resonant tank 204a and the second resonant tank 204b, respectively, which operate to eliminate or reduce any harmonic frequencies therein. The first resonant tank 204a and the second resonant tank 204b provide a first alternating polarity voltage Vsfl and a second alternating polarity voltage Vsf2 (e.g., a second sine wave voltage), respectively, at a fundamental frequency to the output conditioning portion 214. For example, in non-limiting aspects, the first alternating polarity voltage Vsfl can be provided to the first rectifier 216a, and the second alternating polarity voltage Vsfl can be provided to the second rectifier 216b.

The output conditioning portion 214 can convert the respective first alternating polarity voltage Vsfl and the second alternating polarity voltage Vsf2, into a first DC output voltage Vo1, and second DC output voltage Vo2, respectively. For example, the first rectifier 216a, and the second rectifier 216b convert the first and second alternating polarity voltage Vsfl, Vsf2 received from the first resonant tank 204a and the second resonant tank 204b, respectively, to a respective single polarity or first DC voltage Vdc1, and second DC voltage Vdc2, which can be provided to the first output filter 218a and second output filter 218b, respectively. The first output filter 218a, and the second output filter 218b attenuate any switching ripple present on the first DC voltage Vdc1, and the second DC voltage Vdc2, and provide a respective first DC output voltage Vo1, and second DC output voltage Vo2 to the first electrical load 211 and second electrical load 212, respectively.

FIG. 2 depicts, for brevity of description, one non-limiting aspect, in which the transformer 208 has two transformer secondary windings (242a, 242b). It is to be understood that other aspects are not so limited, and the transformer 208 can have any number of secondary windings, which can be electrically coupled to any number of resonant tanks 204a, 204b without limitation, without departing from the scope of the disclosure. Additionally, FIG. 2 depicts one non-limiting aspect in which each output portion 221, 222 has two output lines (e.g., the first and second output lines 223, 224 and the third and fourth output lines 225, 226), respectively. In this non-limiting instance, one respective output line (e.g., the first and third output lines 223, 225) for each output portion 221, 222 is a positive line, and one respective output line for each output portion 221, 222 is a grounded output line (e.g., the second and the fourth output lines 224, 226). Other aspects are not so limited, and the output lines 223, 224, 225, 226 can be electrically coupled to an electrical load (e.g., fixed electrical loads, variable electrical loads, and combinations thereof), and can have any number of output lines, having a voltage thereon.

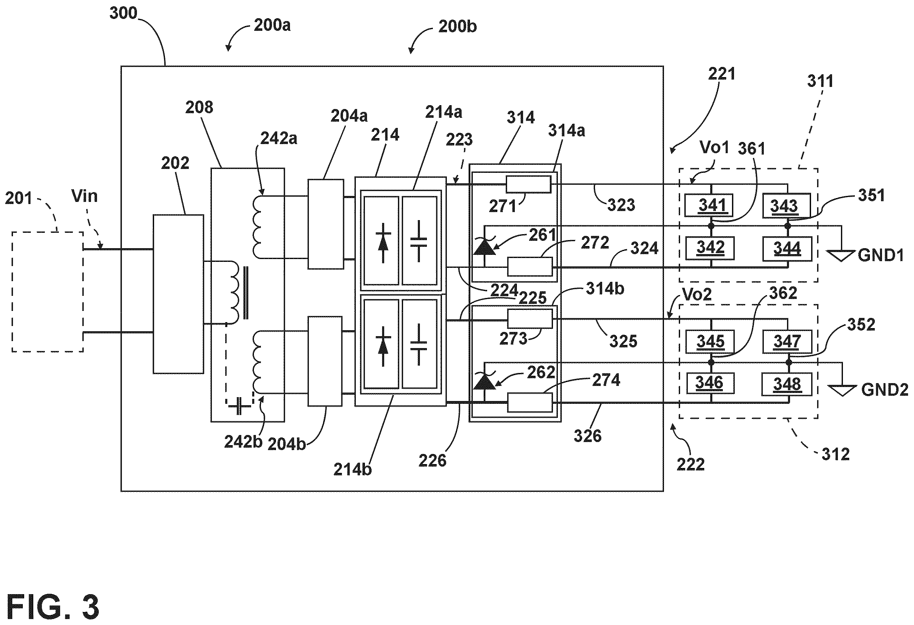

FIG. 3 illustrates a schematic diagram in accordance with another non-limiting aspect of a resonant power converter 300. The resonant power converter 300 of FIG. 3 is similar to the resonant power converter 200 of FIG. 2 so like parts are labelled with like reference numbers. One notable difference between the resonant power converter 300 of FIG. 3 and the resonant power converter 200 of FIG. 2 is that the resonant power converter 300 of FIG. 3 includes a voltage regulator portion 314. For example, in some aspects, the voltage regulator portion 314 can include a first voltage regulator portion 314a and a second voltage regulator portion 314b. The first voltage regulator portion 314a can include a first set of voltage regulators such as a first voltage regulator 271 and a second voltage regulator 272, and a first zener diode 261. The second voltage regulator portion 314b can include a second set of voltage regulators, such as a third voltage regulator 273 and a fourth voltage regulator 274, and a second zener diode 262. Additionally, the first electrical load 311 of FIG. 3 is depicted with a first fixed electrical load 341, a second fixed electrical load 342, a third variable electrical load 343 and a fourth variable electrical load 344. The second electrical load 312 is depicted with a fifth fixed electrical load 345, a sixth fixed electrical load 346, a seventh variable electrical load 347 and an eighth variable electrical load 348.

The resonant power converter 300 can be electrically coupled between the input DC power source 201 and the first and second electrical loads 311, 312. For example, the resonant power converter 300 can have the first output portion 221 electrically coupled to the first electrical load 311 and the second output portion 222 electrically coupled to the second electrical load 312. The resonant power converter 300 can include the switch network 202, the transformer 208, the first resonant tank 204a, the second resonant tank 204b, and the output conditioning portion 214, including the first output conditioning portion 214a and the second output conditioning portion 214b, and further includes the voltage regulator portion 314, including the first voltage regulator portion 314a, and the second voltage regulator portion 314b.

As shown in FIG. 3, the switch network 202 is electrically coupled in series between the input DC power source 201 and the primary side of the transformer 208, defining the primary side 200a of the resonant power converter 300. The first resonant tank 204a and the second resonant tank 204b are arranged on the secondary side 200b of the resonant power converter 200.

The first resonant tank 204a, and the second resonant tank 204b are electrically coupled to a respective first transformer secondary winding 242a and a second transformer secondary winding 242b at the secondary side of the transformer 208 to define the secondary side 200b of the resonant power converter 200. The first resonant tank 204a, and the second resonant tank 204b are electrically coupled in series between the respective first transformer secondary winding 242a and the second transformer secondary winding 242b, respectively, and to the output conditioning portion 214. An output side of the first resonant tank 204a can be electrically coupled to the first output conditioning portion 214a, and an output side of the second resonant tank 204b can be electrically coupled to the second output conditioning portion 214b. The first output conditioning portion 214a and the second output conditioning portion 214b can be electrically coupled to the first voltage regulator portion 314a, and the second voltage regulator portion 314b, respectively. For example, the first voltage regulator portion 314a can be electrically coupled to an output of the first output conditioning portion 214a, (e.g., the first and second output lines 223, 224) and the second voltage regulator portion 314b can be electrically coupled to an output of the second output conditioning portion 214b (e.g., the third and fourth output lines 225, 226).

The first voltage regulator portion 314a, and the second voltage regulator portion 314b can be electrically coupled to the first electrical load 311 and second electrical load 312, respectively. For example, in non-limiting aspects, the first voltage regulator portion 314a can be electrically coupled to the first electrical load 311 by a first voltage regulator portion first output line 323 (e.g., a first positive voltage output line) and a first voltage regulator portion second output line 324 (e.g., a first negative voltage output line). The first DC output voltage Vo1 can be defined between the first voltage regulator portion first output line 323 and the first voltage regulator portion second output line 324.

For example, in non-limiting aspects, the first voltage regulator portion 314a can further include, for example, the first voltage regulator 271 electrically coupled to the first output line 223 to regulate a voltage thereon and the second voltage regulator 272 electrically coupled to the second output line 224 to regulate a voltage thereon. The respective regulated voltages can be provided to the first voltage regulator portion first and second output lines 323, 324 to be provided to the first electrical load 311.

In some aspects, the first zener diode 261 can be electrically coupled at an anode end to the second output line 224 (e.g., a first negative voltage output line), and at a cathode end to the first electrical ground GND1. In operation, the first zener diode 261 can operate to clamp or limit a voltage across the second voltage regulator 272 to a maximum predetermined negative voltage level (e.g., -5V DC).

In non-limiting aspects, the second voltage regulator portion 314b can be electrically coupled to the second electrical load 312 by a second voltage regulator portion third output line 325 (e.g., a second positive voltage output line) and a second voltage regulator portion fourth output line 326 (e.g., a second negative voltage output line). The second DC output voltage Vo2 can be defined between the second voltage regulator portion third output line 325 and the second voltage regulator portion fourth output line 326.

The second voltage regulator portion 314b can further include, for example, the third voltage regulator 273 electrically coupled to the third output line 325 to regulate a voltage thereon and the fourth voltage regulator 274 electrically coupled to the second voltage regulator portion fourth output line 326 to regulate a voltage thereon. The respective regulated voltages can be provided to the second voltage regulator portion third and fourth output lines 325, 326 to be provided to the second electrical load 312.

In some aspects, the second zener diode 262 can be can be electrically coupled at an anode end to the fourth output line 226 (e.g., a second negative voltage output line), and at a cathode end to the second electrical ground GND2. In operation, the second zener diode 262 can operate to clamp or limit a voltage across the fourth voltage regulator 274 to a maximum predetermined negative voltage level (e.g., -5V DC).

As illustrated in FIG. 3, the first electrical load 311 can include the first fixed electrical load 341, and the third variable electrical load 343 electrically coupled to the first voltage regulator portion first output line 323. In some aspects, the first fixed electrical load 341 can be electrically in parallel with the third variable electrical load 343. The first electrical load 311 can further include the second fixed electrical load 342 and the fourth variable electrical load 344 electrically coupled to the second output line 224. In some aspects, the second fixed electrical load 342 can be electrically in parallel with the fourth variable electrical load 344. The third variable electrical load 343 and fourth variable electrical load 344 can be coupled in series by a first grounded line 351. In this way, the third variable electrical load 343 is coupled in series between the first voltage regulator portion first output line 323 and the first electrical ground GND1, and the fourth variable electrical load 344 is electrically coupled in series between the first voltage regulator portion second output line 324 and the first electrical ground GND1.

The first fixed electrical load 341 and second fixed electrical load 342 can be electrically coupled in series via a first load line 361. The first load line 361 can be coupled to the first voltage regulator portion second output line 324 via the first zener diode 261. In such aspects, the first voltage regulator portion first output line 323 can be a positive voltage output line, and the first voltage regulator portion second output line 324 can be a negative voltage output line with both the first voltage regulator portion first output line 323 and second output line 324 having a common ground reference via the first grounded line 351.

The second electrical load 312 can include the fifth fixed electrical load 345 and the seventh variable electrical load 347. In some aspects, the fifth fixed electrical load 345 can be electrically in parallel with the seventh variable electrical load 347. The second electrical load 312 can further include the sixth fixed electrical load 346, and the eighth variable electrical load 348. In some aspects, the sixth fixed electrical load 346 can be electrically in parallel with the eighth variable electrical load 348. The seventh variable electrical load 347 and eighth variable electrical load 348 can be coupled in series by a second grounded line 352. In this way the seventh variable electrical load 347 is coupled in series between the second voltage regulator portion third output line 325 and the second electrical ground GND2, and the eighth variable electrical load 348 is electrically coupled in series between the second voltage regulator portion fourth output line 326 and the second electrical ground GND2.

The fifth fixed electrical load 345 and sixth fixed electrical load 346 can be electrically coupled in series via a second load line 362. The second load line 362 can be coupled to the fourth output line 226 via the second zener diode 262. In such aspects, the third output line 225 can be a positive voltage output line, and the fourth output line 226 can be a negative voltage output line with both the third output line 225 and fourth output line 226 having a common ground reference via the second grounded line 352.

In operation, the resonant power converter 300 can provide a regulated positive voltage (e.g., +20 volts DC) with respect to ground on the first voltage regulator portion first output line 323, and a regulated negative voltage (-5.0 volts DC) with respect to ground on the first voltage regulator portion second output line 324, while deriving their respective voltages from a single secondary winding (e.g., the first transformer secondary winding 242a). Additionally, the resonant power converter 300 can provide a regulated positive voltage (e.g., +20 volts DC) with respect to ground on the second voltage regulator portion third output line 325, and a regulated negative voltage (-5.0 volts DC) with respect to ground on the second voltage regulator portion fourth output line 326, while deriving their respective voltages from another single secondary winding (e.g., the second transformer secondary winding 242b).

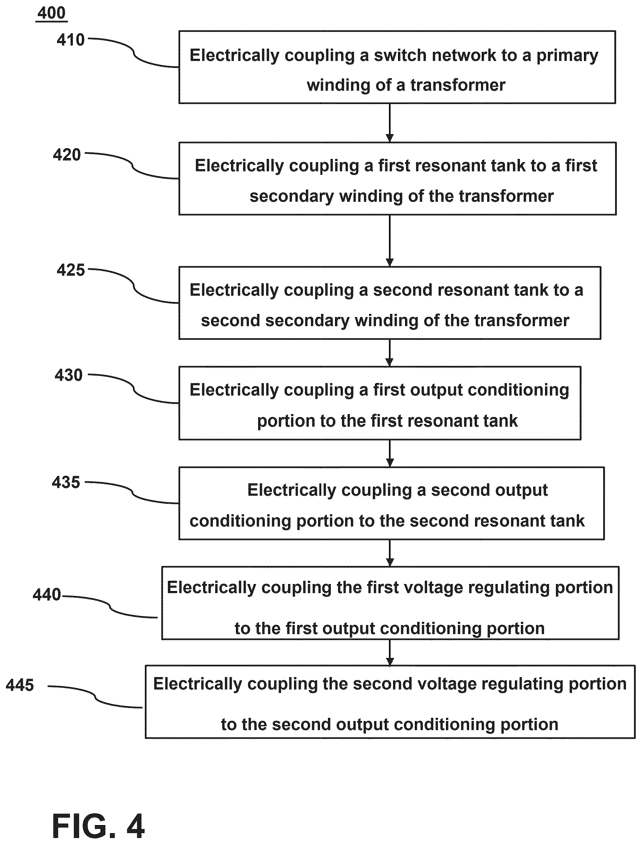

FIG. 4 depicts a method 400 of forming a resonant power converter 200, 300. Although described in terms of an LLC resonant power converter, it will be appreciated that the method 400 can be applied to other power converters such as series resonant converters (e.g., having an electrical load in series with a resonant inductor and a resonant capacitor) and parallel resonant converters (e.g., having a resonant capacitor in parallel with an electrical load). While the method 400 is described herein, for ease of understanding, in terms of the resonant power converter 200, 300, of FIGS. 2-3, other aspects are not so limited and the method 400 can be implemented with a resonant power converter without departing from the scope of the disclosure.

The resonant power converter 200, 300 can include the switch network 202, the transformer 108, the first resonant tank 204a, the second resonant tank 204b, and the output conditioning portion 214. The output conditioning portion 214 can include the first output conditioning portion 214a and the second output conditioning portion 214b. In some aspects, the resonant power converter 200, 300 can further include the voltage regulator portion 314. In non-limiting aspects, the voltage regulator portion 314 can include the first voltage regulator portion 314a and the second voltage regulator portion 314b.

The method 400 can begin at 410 by electrically coupling the switch network 202 to the transformer primary winding 241 of the transformer 208. For example, the switch network 202 can be a full-bridge power converter switch network including the set of electronic switches 202a, 202b, 202c, 202d. In other aspects, the switch network 202 can include any number of electronic switching devices, arranged, without limitation, as a half-bridge converter, a push-pull converter, square wave generator, and the like. In some aspects, the transformer 208 can provide electrical isolation between the primary side 200a and the secondary side 200b of the resonant power converter 200. The transformer 208 can include at least two transformer windings, namely the transformer primary winding 241 and the at least one transformer secondary winding 242a, 242b. For example, the transformer 208 can have three transformer windings including the transformer primary winding 241, the first transformer secondary winding 242a and the second transformer secondary winding 242b. In non-limiting aspects, the first transformer secondary winding 242a and second transformer secondary winding, 242b can have a different number of turns.

The method 400 can include, at 420, electrically coupling the first resonant tank 204a to the first transformer secondary winding 242a of the transformer 208. In non-limiting aspects, the method 400 can further include, at 425, electrically coupling a second resonant tank 204b to the second transformer secondary winding 242b of the transformer 208.

The first resonant tank 204a, and the second resonant tank 204b, are electrically coupled to the respective first transformer secondary winding 242a and the second transformer secondary winding 242b at a downstream or secondary side of the transformer 208 to define a secondary side 200b of the resonant power converter 200, 300. The first resonant tank 204a and the second resonant tank 204b are arranged on the secondary side 200b of the resonant power converter 200. The first resonant tank 204a and the second resonant tank 204b can be implemented in a variety of ways. In non-limiting aspects, first resonant tank 204a and the second resonant tank 204b can each include three respective resonant elements, namely a series resonant inductor 231a, 231b, a parallel resonant inductor 233a, 233b and a series resonant capacitor 235a, 235b. Many other resonant tank arrangements are possible, and the specific resonant elements and arrangements are not germane to the disclosure. In non-limiting aspects, the first and second resonant tanks 204a, 204b can be configured to have a respective predetermined output gain (e.g., a ratio of an output voltage to an input voltage). In some non-limiting aspects, the first and second resonant tanks 204a, 204b can be configured to have a respective output gain that is substantially equal. In other non-limiting aspects, the first and second resonant tanks 204a, 204b can be configured to have a respective output gain that is different in relation to one another.

The method 400 can further include, at 430, electrically coupling the first output conditioning portion 214a to the first resonant tank 204a. In non-limiting aspects, the method 400 can further include, at 435, electrically coupling the second output conditioning portion 214b to the second resonant tank 204b. The first resonant tank 204a, and the second resonant tank 204b can be electrically coupled in series between the respective first transformer secondary winding 242a and the second transformer secondary winding 242b, respectively, and the output conditioning portion 214. The first resonant tank 204a can be electrically coupled to the first output conditioning portion 214a via a first resonant tank first output line 204c and a first resonant tank second output line 204d. The second resonant tank 204b can be electrically coupled to the second output conditioning portion 214b via a second resonant tank third output line 204e and a second resonant tank fourth output line 204f. The first output conditioning portion 214a and the second output conditioning portion 214b can be electrically coupled to the first electrical load 211, 311 and second electrical load 212, 312 respectively.

The first output conditioning portion 214a and the second output conditioning portion 214b can include, for example, a first rectifier 216a, and second rectifier 216b, respectively, and a first output filter 218a, and a second output filter 218b, respectively (e.g., a respective capacitor C1, C2).

The method 400 can further include, at 440, electrically coupling the first voltage regulator portion 314a to the first output conditioning portion 214a. In non-limiting aspects, the first voltage regulator portion 314a can include the first voltage regulator 271 and the second voltage regulator 272. In non-limiting aspects, the first voltage regulator 271 can be electrically coupled to the first output line 223 to regulate a voltage thereon and the second voltage regulator 272 can be electrically coupled to the second output line 224 to regulate a voltage thereon. For example, in some aspects, the first voltage regulator portion 314a can provide a first positive voltage output (e.g., on the first regulator portion first output line 323) and a first negative voltage output (e.g., on the first voltage regulator portion second output line 324). In non-limiting aspects, the electrically coupling the first voltage regulator portion 314a to the first output conditioning portion 214a can include electrically coupling the first voltage regulator portion 314a to the first electrical load 311.

In non-limiting aspects, the method 400 can further include, at 445, electrically coupling the second voltage regulator portion 314b to the second output conditioning portion 214b. In non-limiting aspects, the second voltage regulator portion 314b can include the third voltage regulator 273 and the fourth voltage regulator 274. In non-limiting aspects, the third voltage regulator 273 can be electrically coupled to the third output line 225 to regulate a voltage thereon and the fourth voltage regulator 274 can be electrically coupled to the fourth output line 226 to regulate a voltage thereon. For example, in some aspects, the second voltage regulator portion 314b can provide a second positive voltage output (e.g., on the second voltage regulator portion third output line 325) and a second negative voltage output (e.g., on the second voltage regulator portion fourth output line 326). In non-limiting aspects, the electrically coupling the second voltage regulator portion 314b to the second output conditioning portion 214b can include electrically coupling the second voltage regulator portion 314b to the second electrical load 312.

While the present disclosure has been described with reference to one or more exemplary aspects, it will be understood by those skilled in the art that various changes can be made and equivalents can be substituted for elements thereof without departing from the scope of the present disclosure. In addition, many modifications can be made to adapt a particular situation or material to the teachings of the disclosure without departing from the scope thereof. Therefore, it is intended that the present disclosure is not limited to the particular aspect(s) disclosed as the best mode contemplated for carrying out this disclosure, but that the disclosure will include the aspects falling within the scope of the appended claims.

To the extent not already described, the different features and structures of the various aspects can be used in combination with each other. That one feature cannot be illustrated in all of the aspects is not meant to be construed that it cannot be, but is done for brevity of description. Thus, the various features of the different aspects can be mixed and matched to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the disclosure are provided by the subject matter of the following clauses:
A resonant power converter comprising: a transformer having a primary winding configured to receive an alternating polarity voltage, and a secondary winding; a resonant tank electrically coupled to the first secondary winding; and a output conditioning portion electrically coupled to the resonant tank.

The resonant power converter of any preceding clause, wherein the secondary winding is a first secondary winding, the resonant tank is a first resonant tank, the output conditioning portion is a first output conditioning portion, and the transformer further includes a second secondary winding, the resonant power converter further comprising: a second resonant tank electrically coupled to the second secondary winding; and a second output conditioning portion electrically coupled to the second resonant tank.

The resonant power converter of any preceding clause, wherein the first secondary winding and second secondary winding have a different respective number of turns.

The resonant power converter of any preceding clause, wherein the first resonant tank includes a first series resonant inductor, a first parallel resonant inductor, and a first series resonant capacitor.

The resonant power converter of any preceding clause, wherein the second resonant tank includes a second series resonant inductor, a second parallel resonant inductor, and a second series resonant capacitor.

The resonant power converter of any preceding clause, wherein a respective inductance of the first series resonant inductor or the first parallel resonant inductor or both, can include at least one of a magnetizing inductance or a leakage inductance of the first secondary winding.

The resonant power converter of any preceding clause, wherein a respective inductance of the second series resonant inductor or the second parallel resonant inductor or both, can include at least one of a magnetizing inductance or a leakage inductance of the second secondary winding.

The resonant power converter of any preceding clause, wherein a first output gain of the first resonant tank is different from a second output gain of the second resonant tank.

The resonant power converter of any preceding clause, wherein the first output conditioning portion includes a first rectifier and the second output conditioning portion includes a second rectifier.

The resonant power converter of any preceding clause, wherein the first output conditioning portion includes a first output filter electrically coupled to the first rectifier, and the second output conditioning portion includes a second output filter electrically coupled to the second rectifier.

The resonant power converter of any preceding clause, further comprising: a first voltage regulator portion electrically coupled to the first output conditioning portion; and a second voltage regulator portion electrically coupled to the second output conditioning portion, wherein the first voltage regulator portion includes a first voltage regulator, and the second voltage regulator portion includes a second voltage regulator.

The resonant power converter of any preceding clause, wherein the first voltage regulator portion is configured to provide a first positive voltage output and a first negative voltage output; and the second voltage regulator portion is configured to provide a second positive voltage output and a second negative voltage output.

The resonant power converter of any preceding clause, wherein the AC voltage is high-frequency square wave voltage.

The resonant power converter of any preceding clause, wherein the AC voltage is received by the primary winding from a switch network.

The resonant power converter of any preceding clause, wherein the switch network is configured to convert a DC voltage to an AC voltage.

The resonant power converter of any preceding clause, wherein the switch network is electrically coupled to a DC power source.

The resonant power converter of any preceding clause, wherein the switch network is a full-bridge switch network.

The resonant power converter of any preceding clause, wherein the transformer primary winding is spaced from the at least one transformer secondary winding 242a, 242b

The resonant power converter of any preceding clause, wherein the transformer is a split-core transformer.

The resonant power converter of any preceding clause, wherein the transformer operatively provides a voltage scaling of the AC voltage.

The resonant power converter of any preceding clause, wherein the transformer induces a first alternating polarity voltage across the first secondary winding and a second alternating polarity voltage across the second secondary winding.

The resonant power converter of any preceding clause, wherein the first alternating polarity voltage is provided to the first resonant tank, and the second secondary voltage is provided to the second resonant tank.

The resonant power converter of any preceding clause, wherein the first resonant tank operatively provides a first alternating polarity voltage at a fundamental frequency to the first output conditioning portion.

The resonant power converter of any preceding clause, wherein the second resonant tank operatively provides a second alternating polarity voltage at a fundamental frequency to the second output conditioning portion.

The resonant power converter of any preceding clause, wherein the first and second rectifier are a respective full-wave rectifiers.

The resonant power converter of any preceding clause, wherein the set of electrical loads includes a fixed electrical load.

The resonant power converter of any preceding clause, wherein the set of electrical loads includes a variable electrical load.

The resonant power converter of any preceding clause, wherein the first output conditioning portion is coupled to a first electrical load to provide a first DC output voltage thereto.

The resonant power converter of any preceding clause, wherein the first DC output voltage includes the first positive DC voltage and the first negative DC voltage.

The resonant power converter of any preceding clause, wherein the second output conditioning portion is coupled to a second electrical load to provide a second DC output voltage thereto.

The resonant power converter of any preceding clause, wherein the second DC output voltage includes the second positive DC voltage and the second negative DC voltage.

The resonant power converter of any preceding clause, wherein the set of electrical loads includes a gate driver circuit for a set of semiconductor switching devices.

The resonant power converter of any preceding clause, wherein the set of electrical loads are disposed in an aircraft.

A method of forming a resonant power converter, the method comprising: electrically coupling a switch network to a primary winding of a transformer; electrically coupling a resonant tank to a secondary winding of the a transformer; and electrically coupling an output conditioning portion to the first resonant tank.

The method of any preceding clause, wherein the secondary winding is a first secondary winding, the resonant tank is a first resonant tank, the output conditioning portion is a first output conditioning portion, the method further comprising: electrically coupling a second resonant tank to a second secondary winding of the transformer; and electrically coupling a second output conditioning portion to the second resonant tank.

The method of any preceding clause, wherein the first resonant tank includes a first series resonant inductor, a first parallel resonant inductor, and a first series resonant capacitor.

The method of any preceding clause, wherein the second resonant tank includes a second series resonant inductor, a second parallel resonant inductor, and a second series resonant capacitor.

The method of any preceding clause, wherein a first output gain of the first resonant tank is different from a second output gain of the second resonant tank.

The method of any preceding clause, wherein the first output conditioning portion includes a first rectifier and the second output conditioning portion includes a second rectifier.

The method of any preceding clause, further comprising electrically coupling a first voltage regulator portion including a first voltage regulator to the first output conditioning portion and electrically coupling a second voltage regulator portion including a second voltage regulator to the second output conditioning portion.

The method of any preceding clause, wherein the first voltage regulator portion is configured to provide a first positive voltage output and a first negative voltage output; and wherein the second voltage regulator portion is configured to provide a second positive voltage output and a second negative voltage output.

A resonant power converter comprising: a transformer having a primary winding configured to receive an alternating polarity voltage , and a secondary winding; a resonant tank electrically coupled to the secondary winding; and an output conditioning portion electrically coupled to the resonant tank.

The resonant power converter of any preceding clause, wherein the secondary winding is a first secondary winding, the resonant tank is a first resonant tank, the output conditioning portion is a first output conditioning portion, and the transformer further includes a second secondary winding, the resonant power converter further comprising: a second resonant tank electrically coupled to the second secondary winding; and a second output conditioning portion electrically coupled to the second resonant tank.

The resonant power converter of any preceding clause, wherein the first secondary winding and second secondary winding have a different respective number of turns.

The resonant power converter of any preceding clause, wherein the first resonant tank includes a first series resonant inductor, a first parallel resonant inductor, and a first series resonant capacitor.

The resonant power converter of any preceding clause, wherein a respective inductance of the first series resonant inductor or the first parallel resonant inductor or both, can include at least one of a magnetizing inductance or a leakage inductance of the first secondary winding.

The resonant power converter of any preceding clause, wherein the second resonant tank includes a second series resonant inductor, a second parallel resonant inductor, and a second series resonant capacitor.

The resonant power converter of any preceding clause, wherein a respective inductance of the second series resonant inductor or the second parallel resonant inductor or both, can include at least one of a magnetizing inductance or a leakage inductance of the second secondary winding.

The resonant power converter of any preceding clause, wherein a first output gain of the first resonant tank is different from a second output gain of the second resonant tank.

The resonant power converter of any preceding clause, wherein the first output conditioning portion includes a first rectifier and the second output conditioning portion includes a second rectifier.

The resonant power converter of any preceding clause, wherein the first output conditioning portion includes a first output filter electrically coupled to the first rectifier, and the second output conditioning portion includes a second output filter electrically coupled to the second rectifier.

The resonant power converter of any preceding clause, further comprising: a first voltage regulator portion electrically coupled to the first output conditioning portion; and a second voltage regulator portion electrically coupled to the second output conditioning portion, wherein the first voltage regulator portion includes a first voltage regulator, and the second voltage regulator portion includes a second voltage regulator.

The resonant power converter of any preceding clause, wherein the first voltage regulator portion is configured to provide a first positive voltage output and a first negative voltage output; and the second voltage regulator portion is configured to provide a second positive voltage output and a second negative voltage output.

A method of forming a resonant power converter, the method comprising: electrically coupling a resonant tank to a secondary winding of a transformer; and electrically coupling an output conditioning portion to the first resonant tank.

The method of any preceding clause, wherein the secondary winding is a first secondary winding, the resonant tank is a first resonant tank, the output conditioning portion is a first output conditioning portion, the method further comprising: electrically coupling a second resonant tank to a second secondary winding of the transformer; and electrically coupling a second output conditioning portion to the second resonant tank.

The method of any preceding clause, wherein the first resonant tank includes a first series resonant inductor, a first parallel resonant inductor, and a first series resonant capacitor.

The method of any preceding clause, wherein the second resonant tank includes a second series resonant inductor, a second parallel resonant inductor, and a second series resonant capacitor.

The method of any preceding clause, wherein a first output gain of the first resonant tank is different from a second output gain of the second resonant tank.

The method of any preceding clause, wherein the first output conditioning portion includes a first rectifier and the second output conditioning portion includes a second rectifier.

The method of any preceding clause, further comprising electrically coupling a first voltage regulator portion including a first voltage regulator to the first output conditioning portion and electrically coupling a second voltage regulator portion including a second voltage regulator to the second output conditioning portion.

The method of any preceding clauses, wherein the first voltage regulator portion is configured to provide a first positive voltage output and a first negative voltage output; and wherein the second voltage regulator portion is configured to provide a second positive voltage output and a second negative voltage output.

## Claims

1. A resonant power converter (200), (300), electrically coupleable between a direct current (DC) power source (201) and a set of electrical loads (211), (311), (341), (342), (343), (344), (345), (346), comprising:
a switch network (202);
a transformer (208) having a primary winding (241) electrically coupled to the switch network (202), and a first secondary winding (242a)
a first resonant tank (204a) electrically coupled to the first secondary winding (242a); and
a first output conditioning portion (214a) electrically coupled to the first resonant tank (204a).

2. The resonant power converter (200), (300) of claim 1, wherein the transformer (208) further includes a second secondary winding (242b), the resonant power converter (200), (300) further comprising:
a second resonant tank (204b) electrically coupled to the second secondary winding (242b); and
a second output conditioning portion (214b) electrically coupled to the second resonant tank (204b).

3. The resonant power converter (200), (300) of claim 2, wherein the first resonant tank (204a) includes a first series resonant inductor (231a), a first parallel resonant inductor (233a), and a first series resonant capacitor (235a).

4. The resonant power converter (200), (300) of claim 3, wherein the second resonant tank (204b) includes a second series resonant inductor (231b), a second parallel resonant inductor (233b), and a second series resonant capacitor (235b).

5. The resonant power converter (200), (300) of any of claims 3 to 4, wherein a respective inductance of the first series resonant inductor (231a) or the first parallel resonant inductor (233a) or both, can include at least one of a magnetizing inductance or a leakage inductance of the first secondary winding (242a).

6. The resonant power converter (200), (300) of claim 4, wherein a respective inductance of the second series resonant inductor (231b) or the second parallel resonant inductor (233b) or both, can include at least one of a magnetizing inductance or a leakage inductance of the second secondary winding (242b).

7. The resonant power converter (200), (300) of any of claims 2-6, wherein the first output conditioning portion (214a) includes a first rectifier (116a) and the second output conditioning portion (214b) includes a second rectifier (116b).

8. The resonant power converter (200), (300) of claim 7, wherein the first output conditioning portion (214a) includes a first output filter (218a) electrically coupled to the first rectifier (116a), and the second output conditioning portion (214b) includes a second output filter (218b) electrically coupled to the second rectifier (116b).

9. The resonant power converter (200), (300) of any of claims 2-8, further comprising:
a first voltage regulator portion (314a) electrically coupled to the first output conditioning portion (214a); and
a second voltage regulator portion (314b) electrically coupled to the second output conditioning portion (214b), wherein the first voltage regulator portion (314a) includes a first voltage regulator (271), (272), and the second voltage regulator portion (314b) includes a second voltage regulator (273), (274).

10. The resonant power converter (200), (300) of claim 9, wherein the first voltage regulator portion (314a) is configured to provide a first positive voltage output and a first negative voltage output; and
the second voltage regulator portion (314b) is configured to provide a second positive voltage output and a second negative voltage output.

11. A method (400) of forming a resonant power converter (200), (300), comprising:
electrically coupling a switch network (202) to a primary winding (241) of a transformer (208);
electrically coupling a first resonant tank (204a) to a first secondary winding (242a) of the transformer (208); and
electrically coupling a first output conditioning portion (214a) to the first resonant tank (204a).

12. The method (400) of claim 11, further comprising:
electrically coupling a second resonant tank (204b) to a second secondary winding (242b) of the transformer (208); and
electrically coupling a second output conditioning portion (214b) to the second resonant tank (204b).

13. The method (400) of claim 12, wherein the first output conditioning portion (214a) includes a first rectifier (116a) and the second output conditioning portion (214b) includes a second rectifier (116b).

14. The method (400) of any of claims 12-13, further comprising electrically coupling a first voltage regulator portion (314a) including a first voltage regulator (271), (272) to the first output conditioning portion (214a) and electrically coupling a second voltage regulator portion (314b) including a second voltage regulator (273), (274) to the second output conditioning portion (214b).

15. The method (400) of claim 14, wherein the first voltage regulator portion (314a) is configured to provide a first positive voltage output and a first negative voltage output; and
wherein the second voltage regulator portion (314b) is configured to provide a second positive voltage output and a second negative voltage output.
